# EUROPÄISCHE PATENTANMELDUNG

(11) **EP 4 517 635 A1**
(43) Veröffentlichungstag der Anmeldung: **05.03.2025**
(21) Anmeldenummer: 24197154.8
(22) Anmeldetag: 29.08.2024
(51) Int. Cl.: G06Q 30/04, G06Q 50/06, G06Q 10/10, B60L 53/60, G07F 15/00, B60L 1/00

(54) **VERFAHREN UND MESSEINRICHTUNG ZUR BEREITSTELLUNG EINES STRUKTURIERTEN MESSDATENSATZES**

(30) Priorität: 31.08.2023 DE 102023208346
(71) Anmelder: Siemens Aktiengesellschaft, 80333 München (DE)
(72) Erfinder: Bode, Sebastian, 59229 Ahlen (DE)
(74) Vertreter: Siemens Patent Attorneys

(57) **Zusammenfassung**

Zusammenfassend ermöglicht das erfindungsgemäße Verfahren, die von einer Messeinrichtung gemessenen und bereitgestellten Messdaten für eine Mehrzahl von Abrechnungsinstanzen in einem jeweils spezifisch strukturierten Messdatensatz, insbesondere den jeweiligen Vorgaben einer jeweiligen Abrechnungsinstanz entsprechend, bereitzustellen. Die zur Messung mindestens einer elektrischen Größe eingerichtete Messeinrichtung, bei der aus der elektrischen Größe zumindest indirekt eine übergebene oder bezogene elektrische Energie eines der Messeinrichtung zugordneten Messobjekts ermittelbar ist in der Lage, einen Messdatensatz in verschieden definierbaren Strukturen bzw. Formaten bereitzustellen, wobei die Abrechnungsinstanz als Datenempfänger Umfang, Struktur und Format der zu empfangenden Messdaten trifft. Die erfindungsgemäße Messeinrichtung bildet im Gegensatz zu bekannten Messeinrichtungen eine Vertrauensstelle für eine oder mehrere Abrechnungsinstanz, welche der jeweiligen Abrechnungsinstanz sowie deren Debitoren eine einfach Nachvollziehbarkeit der Rechnungslegung ermöglicht mit dem Authentizitätsdatum für eine Authentizität und Unverfälschtheit der gemessenen und übertragenen Messdaten bürgt.

## Beschreibung

Die Erfindung betrifft ein Verfahren und eine Messeinrichtung zur Bereitstellung eines Messdatensatzes. Im Speziellen betrifft die Erfindung eine Bereitstellung eines spezifisch strukturierten Messdatensatzes für eine Abrechnung elektrischer Energie im Bereich der Elektromobilität.

Im Stand der Technik sind Elektrofahrzeuge bzw. zumindest teilweise mit elektrischer Energie angetriebene Fahrzeuge bekannt. Diese weisen mindestens einen Akkumulator auf, welcher nach einem jeweiligen Betrieb des Elektrofahrzeugs regelmäßig zu laden ist. Ein Laden des Elektrofahrzeugs erfolgt an einem Ladepunkt - in der Fachwelt auch als Electric Vehicle Supply Equipment oder abkürzend EVSE bekannt - welche über ein Ladekabel oder auch mit einer drahtlosen, induktiven Kopplung mit dem Elektrofahrzeug verbunden wird.

Im Stand der Technik sind nicht-schienengebundene Elektrofahrzeuge bekannt, mit einem elektrischen oder hybridelektrischen Traktionsantrieb bekannt. Diese Elektrofahrzeuge beziehen elektrische Energie zumindest teilweise über einen Stromabnehmer zur elektrischen Energieübertragung durch Kontaktierung von Fahrdrähten einer elektrischen Oberleitungsanlage. In einem Traktionsbetrieb erfolgt eine Leistungseinspeisung aus der Oberleitungsanlage in die Transportmaschine, um deren Traktionsantrieb mit elektrischer Energie zu versorgen und um gegebenenfalls einen von der der Transportmaschinen mitgeführten elektrischen Energiespeicher aufzuladen.

Eine oder mehrere Messeinrichtungen dienen einer Erfassung der vom Ladepunkt oder von der elektrischen Oberleitungsanlage an das Elektrofahrzeug übergebenen oder auch von diesem entnommenen elektrischen Energie. Eine letztgenannte Alternative, bei der elektrischen Energie bedarfsweise, beispielweise zur Netzglättung, einem Akkumulator des Elektrofahrzeugs entnommen wird und in ein elektrisches Energienetz eingespeist wird, ist ein Beleg für eine künftig zu erwartende dynamischere Gestaltung von Vertragspartnern. Eine traditionelle feste Vertragsgestaltung zwischen Anbietern und Abnehmern zeigt bereits heute eine Entwicklung in Richtung dezentral organisierte sogenannte »Prosumer«, Teilnehmern am elektrischen Energienetz also, welche fallweise oder zeitweise Produzenten (Producers) oder auch Konsumenten (Consumers) elektrischer Energie sein können.

Eine solche Entwicklung in Richtung dezentral organisierte Teilnehmer und Vertragspartner am elektrischen Energienetz ist auf dem Gebiet der Elektromobilität bereits heute gängig, beispielsweise in dem Fall, in dem ein Elektrofahrzeug morgens geladen wird um dann, falls die geladene und im Elektrofahrzeug gespeicherte elektrische Energie nicht für untertägige Fahrten benötigt wird, tagsüber wieder teilweise entladen wird, indem die im Elektrofahrzeug gespeicherte elektrische Energie wieder in das elektrische Energienetz zurückgegeben und veräußert wird. Der morgens als Konsument agierende Halter des Elektrofahrzeugs hat also untertags seine Rolle als Produzent elektrischer Energie gewechselt.

Mit einem zunehmenden Ausbau einer Ladeinfrastruktur oder einer Leistungseinspeisungsinfrastruktur aus einer Oberleitungsanlage ergeben sich durch rechtliche Anforderungen neue Herausforderungen bei einer Inrechnungstellung der übergebenen elektrischen Energie sowie weiterer, indirekt mit dem Ladevorgang zusammenhängender Rechnungsposten, wie z.B. eine zeitliche Belegung eines Parkraums oder einer zurückgelegten Fahrstrecke, die einer technischen Lösung bedürfen.

Die Herausforderungen stammen zum einem aus der Vielzahl möglicher Beziehungen der Beteiligten und ihrer Vertragsverhältnisse und zum anderen aus übergeordneten, zum Teil widerstreitender rechtlicher Vorgaben, wie z.B. steuerrechtlicher Dokumentationspflichten einerseits und datenschutzrechtlicher Vorgaben andererseits. Mit einer Beziehung der Beteiligten ist insbesondere zu verstehen, dass anstelle eines direkten Vertragspartners auch ein Mitarbeiter, ein Angehöriger, ein Unterauftragnehmer o.ä. aktiv werden kann und unterschiedliche Leistungen möglicherweise auf Rechnung verschiedener Akteure geleistet werden. Insbesondere kann es z.B. erforderlich sein, eine Abstelldauer und die während des Ladevorgangs bezogene Energie getrennt zu verrechnen. Es kann auch erforderlich sein, dass die dem Elektrofahrzeug übergebene oder auch die dem Elektrofahrzeug entnommene elektrische Energie zunächst gegenüber einem Betreiber eines Ladepunkts oder einer elektrischen Oberleitungsanlage verrechnet wird, welche diese wiederum mit einem Energieversorgungsunternehmen verrechnet.

Bereits seit einiger Zeit ist es beispielsweise gängig, für eine Bewirtschaftung eines Ladepunkts zwischen einem Betreiber der Ladestation bzw. Ladepunktbetreiber oder CPO (»Charge Point Operator«) und einem Elektromobilitätsanbieter oder EMP (»Electro Mobility Provider«) zu unterscheiden. Während der Elektromobilitätsanbieter traditionell einen festen Vertragspartner für den Benutzer der Ladestation bildete, der dem Benutzer einen Zugang zu unterschiedlichen Ladepunkten anbietet und die dort bezogene Ladeleistung in Rechnung stellte, ist der Ladepunktbetreiber für die technische Instandhaltung, die Energieversorgung und den Zugang zur Ladeinfrastruktur verantwortlich. Diese festen Vertragsbindungen im Zusammenhang mit Ladepunkten werden durch sogenannte Roaming-Anbieter zunehmend volatiler. Auch bei der elektrischen Energieversorgung über elektrischen Oberleitungsanlage ist ein Trend festzustellen, dass die traditionelle Bewirtschaftung der Energieversorgung sowie der Unterhalt der elektrischen Oberleitungsanlage in einzelne trassenbasierte Vertragsanbieter zerfällt.

Mit Wegfall eines festen Vertragsanbieter zerfällt auch die traditionelle Rolle einer vormals zentralen Abrechnungsinstanz oder Abrechnungsstelle in mehrere einzelne Abrechnungsinstanzen. Damit entsteht zunehmen ein Problem, wem die Verantwortung für eine eichrechtlich geforderte Messgenauigkeit zufällt. Während vormals die zentrale Abrechnungsinstanz eine Installation, Instandhaltung und eichrechtliche Zertifizierung von Messeinrichtungen zur Messung der übergebenen elektrischen Energie verantwortete, entfällt bei Wegfall der festen Vertragsbindungen die eindeutige Verantwortung für eine Nachvollziehbarkeit der Rechnungslegung und sogar für die Messgenauigkeit der einzelnen Messeinrichtungen.

Weiterhin besteht ein Problem darin, eine Erstellung eines Messdatensatzes abhängig von mehreren verschiedenen Abrechnungsinstanzen, Vertragspartner oder anderen Datenempfängern unterschiedlich zusammenzustellen und strukturell zu gestalten.

Die vorliegende Erfindung ist vor die Aufgabe gestellt, Mittel anzugeben, mit dem die von einer Messeinrichtung gemessenen und bereitgestellten Messdaten für eine Mehrzahl von Abrechnungsinstanzen in einem jeweils spezifisch strukturierten Messdatensatz - d.h. den jeweiligen Vorgaben einer jeweiligen Abrechnungsinstanz entsprechend - bereitgestellt werden können.

Die Aufgabe wird durch ein Verfahren mit den Merkmalen des Patentanspruchs 1 gelöst.

Das erfindungsgemäße Verfahren zur Bereitstellung eines spezifisch strukturierten Messdatensatz durch eine Messeinrichtung, umfasst die Schritte:
a) Senden eines ersten Messdatensatzes von der Messeinrichtung an zumindest eine Abrechnungsinstanz, der erste Messdatensatz enthaltend eine Mehrzahl strukturiert geordneter Messdaten;
b) Empfang eines in Antwort auf den ersten Messdatensatz von einer der zumindest einen Abrechnungsinstanz gesendeten zweiten Messdatensatzes, wobei anhand der strukturiert geordneten Messdaten des zweiten Messdatensatzes zumindest durch Vergleich mit den strukturiert geordneten Messdaten des ersten Messdatensatzes mindestens eine Vorschrift für den spezifisch strukturierten Messdatensatzes ableitbar ist;
c) Zusammenstellung einer Mehrzahl von der Messeinrichtung gemessener und/oder ermittelter Messdaten und Erzeugung eines anhand der mindestens einen Vorschrift spezifisch strukturierten Messdatensatzes;
d) Anreicherung des spezifisch strukturierten Messdatensatzes mit mindestens einem Authentizitätsdatum zur Bestätigung, dass der spezifisch strukturierte Messdatensatz von der Messeinrichtung gemessene und/oder ermittelte Messdaten enthält, welche gemäß der mindestens einen Vorschrift strukturiert sind; und;
e) Übertragung des mindestens einen mit dem Authentizitätsdatum angereicherten spezifisch strukturierten Messdatensatzes an die zumindest eine Abrechnungsinstanz.

Die Erfindung ist von einem Paradigmenwechsel in der Verantwortungsverteilung für eine Nachvollziehbarkeit der Rechnungslegung geprägt. In Abkehr eines Protokolls traditioneller Messeinrichtungen ist die erfindungsgemäße Messeinrichtung nicht länger lediglich ein bloßer Datenlieferant aller gemessenen Daten. Die erfindungsgemäße Messeinrichtung ermöglicht stattdessen eine vorgelagerte Rechnungslegung, indem sie einer bestimmten Abrechnungsinstanz einen von dieser Abrechnungsinstanz definierten Messdatensatz liefert.

Die erfindungsgemäße Messeinrichtung bildet im Gegensatz zu bekannten Messeinrichtungen eine Vertrauensstelle für eine oder mehrere Abrechnungsinstanz, welche der jeweiligen Abrechnungsinstanz sowie deren Debitoren eine einfach Nachvollziehbarkeit der Rechnungslegung ermöglicht mit dem Authentizitätsdatum für eine Authentizität und Unverfälschtheit der gemessenen und übertragenen Messdaten bürgt.

Das erfindungsgemäße Verfahren sieht in einem Schritt a) vor, dass zunächst ein erster Messdatensatz an zumindest eine Abrechnungsinstanz, vorzugsweise alle in der Messeinrichtung registrierten Abrechnungsinstanzen, gesendet wird. Dieser Schritt kann zu einer in der Fachwelt auch als »Capabilities Exchange« bezeichneten Vorstellung der Fähigkeiten der Messeinrichtung genutzt werden, indem alle verfügbaren Messdaten Abrechnungsinstanzen versendet werden, um einzelnen Abrechnungsinstanzen zu ermöglichen, hiervon eine Auswahl zu treffen und gleichzeitig strukturelle Präfenzen zur Gliederung und Formatierung des strukturierten Messdatensatz zu treffen.

Der von der Abrechnungsinstanz definierte Messdatensatz wird in einem zweiten Schritt b) strukturell definiert, indem eine Abrechnungsinstanz einen zweiten Messdatensatz sendet, dessen Änderungen gegenüber dem zuvor von der Messeinrichtung gesendeten ersten Messdatensatzes den strukturellen Vorgaben dieser bestimmten Abrechnungsinstanz entspricht. Andere Abrechnungsinstanzen können entsprechend andere strukturellen Vorgaben stellen. Die Messeirichtung kann nun anhand der erhaltenen strukturiert geordneten Messdaten des zweiten Messdatensatzes zumindest durch Vergleich mit ihrer zuvor übersandten Vorlage - der strukturiert geordneten Messdaten des ersten Messdatensatzes also - mindestens eine Vorschrift für den in Folge zu sendenden spezifisch strukturierten Messdatensatz ableiten. Im einfachsten Fall enthält der zweiten Messdatensatz ein bestimmtes Messdatum nicht, welches in der Vorlage des ersten Messdatensatzes von der Messeinrichtung angeboten wurde. Daraus wird von der Messeinrichtung eine Vorschrift abgeleitet, dass diese spezielle Abrechnungsinstanz dieses bestimmte Messdatum nicht benötigt. Diese Vorschrift kann entweder bis zur Übertragung des spezifisch strukturierten Messdatensatzes an die spezielle Abrechnungsinstanz gemäß des folgenden Verfahrensschritts e) gelten - und somit beim erneuten Durchlauf des erfindungsgemäßen Verfahrens wieder zurückgesetzt werden - oder für künftige Übertragungen des spezifisch strukturierten Messdatensatzes an die spezielle Abrechnungsinstanz gespeichert bleiben mit der Folge, dass die spezielle Abrechnungsinstanz beispielsweise dieses bestimmte Messdatum beim erneuten Durchlauf des erfindungsgemäßen Verfahrens im Verfahrensschritt a) nicht mehr im ersten Messdatensatz anbietet.

In einem dritten Schritt c) ist eine Erzeugung eines anhand der mindestens einen Vorschrift spezifisch strukturierten Messdatensatz vorgesehen. Hierzu erfolgt eine Zusammenstellung einer Mehrzahl von der Messeinrichtung beispielsweise aktuell gemessener und/oder ermittelter Messdaten. Der definierte Messdatensatz kann bezüglich seines Umfangs - also welche Messdaten die bestimmte Abrechnungsinstanz aufgrund mindestens einer in Schritt b) abgeleiteten Vorschrift überhaupt benötigt - als auch strukturell definiert sein. Bei der letztgenannten strukturellen Definition kann der Messdatensatz beispielweise abschnittsweise unterteilt und signiert gefordert sein, um es der Abrechnungsinstanz zu ermöglichen, einzelne Abschnitte wiederum an untergeordnete Abrechnungsinstanzen von Auftragsnehmern weiterzureichen um diese Abschnitte unverändert zu lassen, um die digitale Signatur weiterhin gültig zu erhalten. Auf diese Weise bleibt eine Integrität und Authentizität der Abschnitte auch für die untergeordnete Abrechnungsinstanzen einer jeweiligen Abrechnungsinstanz erhalten.

Der spezifisch strukturierten Messdatensatz wird dann in einem vierten Schritt d) mit mindestens einem Authentizitätsdatum - beispielweise unter Beteiligung einer kryptographischen Signatur - angereichert. Diese Anreicherung dient neben einer Bestätigung der Authentizität - also einer Bestätigung, dass der Messdatensatz tatsächlich von der Messeinrichtung stammt - und der Integrität - also einer Gewährleistung, dass der Messdatensatz oder Teile des Messdatensatzes nicht veränderte wurden - unter anderem einer Bestätigung, dass der spezifisch strukturierte Messdatensatz von der Messeinrichtung gemessene und/oder ermittelte Messdaten enthält, welche gemäß der mindestens einen Vorschrift strukturiert sind.

In einem fünften Schritt e) wird der mit dem Authentizitätsdatum angereicherte spezifisch strukturierte Messdatensatz an die zumindest eine Abrechnungsinstanz übertragen.

Die erfindungsgemäße Messeinrichtung zur Bereitstellung eines spezifisch strukturierten Messdatensatz ist vorzugsweise eingerichtet zur Messung mindestens einer elektrischen Größe, aus der zumindest indirekt eine übergebene oder bezogene elektrische Energie eines der Messeinrichtung zugeordneten Messobjekts ermittelbar ist. Die Messeinrichtung kann aber - je nach Anforderung einer mit der Messeinrichtung kommunizierenden Abrechnungsinstanz - auch zur Erfassung anderer Messdaten - insbesondere auch zeitliche Größen wie z.B. eine zeitliche Belegung eines Parkraums oder einer zurückgelegten Fahrstrecke - eingerichtet sein und diese in einem entsprechend strukturierten Messdatensatz übertragen. Unter Messdaten werden ferner auch Daten verstanden, die im Zusammenhang mit der Messung anfallen oder zur Klassifizierung der Messung hilfreich oder erforderlich sind.

Messdaten sind dabei nicht lediglich das Ergebnis einer Messung durch die Messeinrichtung, sondern umfassen auch Daten wie z.B. eine Seriennummer der Messeinrichtung, eine Ortskoordinate, eine Zeit oder ein Identifikationsdatum zum Zeitpunkt der Messung. Das Identifikationsdatum kann beispielsweise die Einheit - beispielsweise Ladepunkt, Ladestation, Fahrzeug, Stromabnehmer etc. - charakterisieren, in die die Messeinrichtung fest verbaut ist. Das Identifikationsdatum kann beispielsweise das Messobjekt charakterisieren.

Während im Stand der Technik bislang tendenziell zu viele Messdaten gespeichert oder übertragen wurden, ermöglicht die Erfindung eine Speicherung, Vorhaltung und/oder Übermittlung eines Messdatensatzes, welcher eine durch eine jeweilige Abrechnungsinstanz bestimmte Untermenge der Messdaten enthält. Insbesondere kann ein erster Messdatensatz auf eine Abrechnung einer Parkzeit bezogen sein, während ein zweiter Messdatensatz auf eine Abrechnung einer während des Ladevorgangs bezogenen elektrischen Energie bezogen ist. Aber auch eine identische Leistungserbringung, zum Beispiel die Abgabe elektrischer Energie, könnte unterschiedlichen Abrechnungsmodellen unterliegen. Bei einem Ladevorgang eines Benutzers der Ladestation könnte der Elektromobilitätsanbieter oder EMP dem Benutzer eine Abrechnung auf Basis einer Dauer des Ladevorgangs erstellen, während der Ladepunktbetreiber oder CPO dem Elektromobilitätsanbieter eine Abrechnung auf Basis einer während des Ladevorgangs abgegebene elektrischen Energie erstellt.

In vorteilhafter Weise können also ungeachtet der gleichen Leistungserbringung - Abgabe elektrischer Energie - zwei unterschiedliche Messdatensätze generiert werden, welche die jeweilige Abrechnung häufig wechselnder Vertragspartner
- Benutzer, Ladepunktbetreiber und Elektromobilitätsanbieter - erheblich zu erleichtern vermögen:
- ein erster an den Elektromobilitätsanbieter übermittelter Messdatensatz zur Verrechnung der Dauer des Ladevorgangs zwischen dem Elektromobilitätsanbieter und dem Ladesäulennutzer; und;
- ein zweiter an den Elektromobilitätsanbieter übermittelter Messdatensatz zur Verrechnung der während des Ladevorgangs abgegebene elektrischen Energie zwischen dem Ladepunktbetreiber oder CPO und dem Elektromobilitätsanbieter.

Im Unterschied zum Stand der Technik ist ein erfindungsgemäßes Messeinrichtung in der Lage, einen Messdatensatz in verschieden definierbaren Strukturen bzw. Formaten bereitzustellen, wobei die Abrechnungsinstanz als Datenempfänger Umfang, Struktur und Format der zu empfangenden Messdaten trifft.

Die erfindungsgemäßen Mittel ermöglichen es dem Datenempfänger, den ausgegeben Messdatensatz hinsichtlich Umfangs und Darstellung der ausgegeben Werte bzw. Messdaten zu steuern. Auf diese Weise ermöglicht es der erfindungsgemäße erzeugte Messdatensatz dem Datenempfänger, datenschutzrechtliche Vorgaben zu erfüllen, und gleichzeitig im Messdatensatz tatsächlich benötigte Daten vollständig zur Verfügung zu haben. Die Daten im Messdatensatz liegen in vorteilhafter Weise in einer vom Datenempfänger definierbaren Struktur vor, welche eine Weiterverarbeitung in Datenverarbeitungsanlagen sowohl des Datenempfängers als auch dessen Kunden bzw. Debitoren erleichtert.

Die Erfindung hat den Vorteil, dass sie für das insbesondere in der Elektromobilität bestehende Problem, nahezu alle später für Abrechnungszwecke benötigten Messdaten zum Zeitpunkt der Energielieferung erfassen zu müssen, eine technische Lösung für eine datensparsame und rechtskonforme Datenerhebung liefert.

Weitere Ausgestaltungen der Erfindung sind Gegenstand der abhängigen Patentansprüche.

Gemäß einer Ausgestaltung des erfindungsgemäßen Verfahrens ist vorgesehen, dass das Senden des ersten Messdatensatzes an eine Mehrzahl der zumindest einen Abrechnungsinstanz in einer kettenförmigen Weise durch jeweilige Weiterleitung zwischen den Abrechnungsinstanzen erfolgt. Diese kettenförmige Weiterleitung bildet technisch die häufigste Vertragsbeziehung in einer kettenförmigen Hierarchie aus Unternehmern und Subunternehmern ab. Technisch und im Rahmen der Erfindung sind jedoch auch sind jedoch auch Broadcast- oder Multicast-Sendungen möglich und durchführbar.

Gemäß einer Ausgestaltung des erfindungsgemäßen Verfahrens ist vorgesehen, in den ersten Messdatensatz und/oder in den zweiten Messdatensatz zumindest teilweise pseudonymisierte Messdaten aufzunehmen. Dabei werden einzelne oder mehrere Messdaten vor Übermittlung im ersten Messdatensatz oder im zweiten Messdatensatz pseudonymisiert oder nur ein Teil der Messdaten, etwa nur die einen jeweiligen Zeitstempel enthaltende Messdaten übertragen. Hierdurch kann erreicht werden, dass die nicht benötigten Messdaten, welche auch personenbezogene Daten enthalten können, nicht an eine externe Datenverarbeitung in oder über eine Abrechnungsinstanz übertragen werden müssen, sondern gesichert in der Messeinrichtung verbleiben. Zu personenbezogene Daten, die in den Messdaten enthalten sein können, kann z.B. ein Namen eines Fahrers oder Halters gehören, welche derzeit ein Fahrzeug führt, das Gegenstand der Messung ist. Auch Teilinformationen, welche gemeinsam zu einer Identifizierung einer bestimmten Person führen können, stellen personenbezogene Daten dar. Unter solche Teilinformationen könnte bereits ein Fahrzeugidentitätsdatum oder ein amtliches Kraftfahrzeugkennzeichen fallen. In einer bevorzugten Ausführungsform des Verfahrens würde jede Stelle die Messdaten bei Kenntnis der Anforderungen der nachfolgenden Stelle so weit aggregieren bzw. reduzieren wie möglich.

Gemäß einer Ausgestaltung des erfindungsgemäßen Verfahrens ist vorgesehen, dass die mindestens eine Vorschrift für den spezifisch strukturierten Messdatensatzes als explizite Anweisung von der Messeinrichtung empfangen wird. Während das erfindungsgemäße Verfahren zunächst lediglich eine implizite Vorschrift fordert, zu deren Ableitung der zweite Messdatensatzes mit dem ersten Messdatensatz verglichen wird und die implizite Vorschrift durch Unterschiede in beiden Messdatensätzen ermittelt wird, kann die Vorschrift auch alternativ oder zusätzlich als Anweisung von der Messeinrichtung empfangen.

Eine implizite Vorschrift kann etwa für den Fall abgeleitet werden, dass einzelne Messdaten im zweiten Messdatensatz nicht aufgeführt werden und deren Werte im darauf folgenden spezifisch strukturierten Messdatensatz nicht übermittelt werden sollen. Eine implizite Vorschrift kann auch für den Fall abgeleitet werden, dass Messdaten ausweislich des zweiten Messdatensatzes aggregiert werden sollen, z.B. als Summe über aufeinanderfolgende Abschnitte mit Angabe von Beginn und Ende. Eine weitere Möglichkeit zur impliziten Angabe einer Vorschrift kann darin bestehe, dass eine Vorschrift in einem rückwärtsgerichteten arithmetischen Schritt ermittelt wird, etwa dann, wenn ein bestimmtes Messdatum im zweiten Messdatensatz als Verdoppelung eines ursprünglichen Messdatums angegeben ist, wobei die Vorschrift bzw. Operation durch rückwärtsgerichteten Vergleich implizit abzuleiten ist. Diese lediglich implizite Angabe der Vorschrift ermöglicht es der Messeinrichtung ohne weiteres, die Vorschrift für die Generierung des zu übertragenden Messdatums im spezifisch strukturierten Messdatensatz aus dem abgeleiteten Messdatum des zweiten Messdatensatzes, sowie dem ursprünglichem Messdatum des ersten Messdatensatzes zu ermitteln. Dieser Ermittlung einer Vorschrift kann basierend auf dem abgeleiteten Messdatensatz beliebig oft durchlaufen werden. Ein technischer Zweck einer expliziten Mitteilung der Vorschrift an die Messeinrichtung besteht unter anderem auch darin, dass die Messeinrichtung verstehen sollte, welche Messdaten von einer der in kettenförmigen Weise durch jeweilige Weiterleitung weitergeleiteten Abrechnungsinstanzen in einem jeweiligen Datenbereich zusammengefasst oder aggregiert werden, damit die Messeinrichtung eine digitale Signatur über die so strukturell definierten Datenbereiche der Messdaten entsprechend gestalten kann.

Gemäß einer Ausgestaltung des erfindungsgemäßen Verfahrens ist vorgesehen, dass die von der Messeinrichtung abgeleitete Vorschrift von der Messeinrichtung an mindestens eine Abrechnungsinstanz gesendet wird, vorzugsweise an die Abrechnungsinstanz, welche die Vorschrift implizit - durch bloße Übermittelung des gegenüber dem erste Messdatensatz geänderten zweiten Messdatensatz - oder explizit - als explizite Anweisung gemäß der oben beschriebenen Ausgestaltung von der Messeinrichtung empfangen - gestellt hat. Der technische Zweck dieser Sendung bzw. Rücksendung der Vorschrift an die Abrechnungsinstanz besteht in einer Bestätigung einer expliziten oder impliziten Vorschrift.

Gemäß einer Ausgestaltung des erfindungsgemäßen Verfahrens ist vorgesehen, vor Erzeugung des spezifisch strukturierten Messdatensatzes eine Mehrzahl von Vorschriften unter Anwendung mindestens einer Optimierungsoperation, vorzugweise numerischer oder logischer Optimierungsoperation, auf eine reduzierte Mehrzahl an Vorschriften zu reduzieren. Dabei werden Vorschriften zur Erzeugung des Messdatensatzes in einer Weise umgeformt, d.h. numerisch optimiert oder auch eventuell numerische Operationen übergeleitet auf analytische Operationen, um z.B. mehrfache Rundungen infolge der Anwendung mehrerer eine Rundung beinhaltenden Anweisungen und die hierdurch verursachten Rundungsfehler zu reduzieren.

Gemäß einer Ausgestaltung des erfindungsgemäßen Verfahrens ist vorgesehen, dass das mindestens eine Authentizitätsdatum mindestens eine kryptographische Signatur umfasst. Andere Formen zur Prüfung und Bestätigung der Authentizität sind jedoch ebenso denkbar.

Gemäß einer Ausgestaltung des erfindungsgemäßen Verfahrens ist vorgesehen, dass die mindestens eine kryptographische Signatur über ein Messdatum, über eine insbesondere durch die mindestens eine Vorschrift definierte Mehrzahl von Messdaten und/oder über den gesamten spezifisch strukturierten Messdatensatz gebildet wird. Dabei ist vorzugsweise vorgesehen, dass mindestens ein Bereich des spezifisch strukturierten Messdatensatzes definierbar ist, welcher kryptographisch signiert und somit der definierbare Bereich des Messdatensatzes integritätsgeschützt und authentisch bereitgestellt wird. Hierzu können Bereiche definiert sein, über welche die Signatur zu berechnen ist, und andere Bereiche, in denen eine Ablage dieser Signatur vorgesehen ist. Insbesondere kann vorgesehen seien, dass der gemäß der strukturellen Vorlage des zweiten Messdatensatzes sowie der impliziten und expliziten Regeln erzeugte spezifisch strukturierte Messdatensatz über eine Mehrzahl von Signaturen verfügt. Die Signaturen können sich dabei sowohl über unabhängige, d.h. schnittmengenfreie Bereiche des Messdatensatzes erstrecken, als auch über überlappende Bereiche oder sogar über Bereiche, die weitere Signaturen enthalten. Durch die vorteilhafte Möglichkeit, mehrere Signaturen in einem Messdatensatz zu verwenden, kann bei Bedarf ein Teil des Messdatensatzes zu einem späteren Zeitpunkt noch in einer kontrollierten, dokumentierbaren und überprüfbaren Weise verändert werden, ohne dass der Integritätsschutz der anderen Teile des Messdatensatzes beeinträchtigt wird. Beispielsweise könnten Kerninformationen des Messdatensatzes über eine erste Signatur, der vollständige Messdatensatz über eine zusätzliche zweite Signatur gesichert werden, sodass Informationen aus dem erweiterten Datensatz gelöscht oder überarbeitet werden könnten, ohne die Integrität der Kerninformationen zu beeinträchtigen.

Im Folgenden werden weitere Ausführungsbeispiele und Vorteile der Erfindung anhand der Zeichnung näher erläutert. Dabei zeigen:
- Fig. 1:: eine schematische Strukturdarstellung einer Mehrzahl von Vertragsbeziehungen bei einer Bereitstellung und Verrechnung elektrischer Energie für ein oder mehrere Elektrofahrzeuge; und;
- Fig. 2:: ein Ablaufdiagramm zur Darstellung eines Verfahrens zur Bereitstellung eines Messdatensatzes.

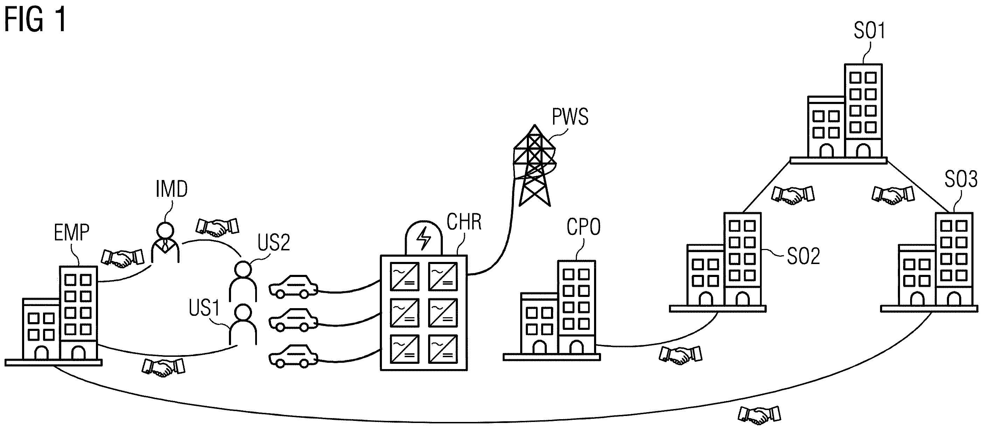

FIG. 1 zeigt eine schematische Strukturdarstellung einer Mehrzahl von Vertragsbeziehungen bei einer Bereitstellung und Verrechnung elektrischer Energie für ein oder mehrere Elektrofahrzeuge.

Ein erster Benutzer US1 eines Elektrofahrzeugs ist über eine - in der Zeichnung ohne Bezugszeichen durch einen Handschlag zweiter Vertragspartner dargestellte - Vertragsbeziehung mit einem Elektromobilitätsanbieter EMP verbunden.

Ein zweiter Benutzer US2 eines anderen Elektrofahrzeugs ist über eine Vertragsbeziehung mit einem Roaming-Plattform IMD verbunden, durch die in diesem Fall der gleiche Elektromobilitätsanbieter EMP ausgewählt wird und zu einer weiteren Vertragsbeziehung zwischen der Roaming-Plattform IMD und dem Elektromobilitätsanbieter EMP führt.

Alle in der Zeichnung dargestellten Elektrofahrzeuge werden an einer Ladestation CHR mit drei Ladepunkten geladen, wobei ein jeweiliger Ladepunkt der Ladestation mit einem Ladekabel mit einem jeweiligen Elektrofahrzeug verbunden ist. Die Ladestation CHR ist mit einem elektrischen Energieversorgungsnetz PWS verbunden.

Ein Ladepunktbetreiber CPO der Ladestation CHR steht in einer vertraglichen Verbindung mit einem zweiten Unternehmensverbund S02, der wiederum in einer vertraglichen Verbindung mit einem ersten Unternehmensverbund SO1 steht. Der erste Unternehmensverbund SO1 steht wiederum in vertraglicher Verbindung mit dem dritten Unternehmensverbund SO3, welcher wiederum in vertraglicher Verbindung mit dem dritten Elektromobilitätsanbieter EMP steht.

Das oben dargestellte Vertragsbeziehungsgeflecht gibt ungeachtet der noch überschaubareren Anzahl der hier beteiligten vertraglichen Akteure und ohne Notwendigkeit einer näheren Erläuterung einen Eindruck über die Notwendigkeit darüber, eine Erstellung eines Messdatensatzes abhängig von mehreren verschiedenen Abrechnungsinstanzen oder Vertragspartnern unterschiedlich zusammenzustellen und strukturell zu gestalten.

Gemäß der erfindungsgemäßen Mittel und ihrer Ausführungsformen werden die von der Messeinrichtung gemessenen und bereitgestellten Messdaten für eine Mehrzahl von Abrechnungsinstanzen in einem jeweils spezifisch strukturierten Messdatensatz - d.h. den jeweiligen Vorgaben einer jeweiligen Abrechnungsinstanz entsprechend - bereitgestellt.

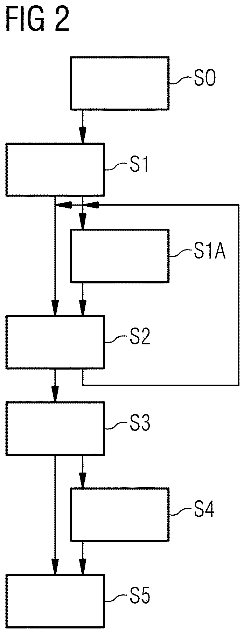

FIG. 2 zeigt ein Ablaufdiagramm zur Darstellung einer Ausführungsform eines Verfahrens zur Bereitstellung eines Messdatensatzes.

Die Messeinrichtung übermittelt in einem ersten Verfahrensschritt S1 eine Gesamtheit der Messdaten als ersten Messdatensatz.

Basierend auf den strukturierten Messdaten kann eine den ersten Messdatensatz empfangende Abrechnungsinstanz, beispielsweise eine Abrechnungsinstanz eines CPO, in einem zweiten Verfahrensschritt S2 einen überarbeiteten zweiten Messdatensatz erstellen, bei dem z.B. ein stündlicher Messwert aus einer Summenbildung von vier viertelstündlichen Messwerten anstatt der im ersten Messdatensatz vorgesehenen vier viertelstündlichen Messwerten vorgesehen ist, da sich der Preis pro kWh Ladenergie an einem diesem CPO zugordneten Ladepunkt nicht so häufig ändert. Weiterhin kann eine Vorschrift zum Erzeugen des zweiten Messdatensatzes erzeugt werden, welcher in etwa einer Formel in einem bekannten Tabellenkalkulationsprogramm Microsoft Excel entsprechen kann. Die Formel dieser Vorschrift kann etwa eine Aufsummierung der oben beschriebenen Viertelstundenwerte anweisen). Alternativ sind alle beliebigen Anweisungen denkbar, etwa in strukturierten Formaten wie XML (Extensible Markup Language) etc. Diese Vorschrift kann auch implizit durch das Ergebnis repräsentiert sein, welche in Verbindung mit dem ursprünglichen Messdatum in Rückwärtsrichtung rekonstruierbar ist. Eine implizite Vorschrift bietet sich etwa für den Fall an, dass Messdaten verworfen werden oder in offensichtlicher Weise aggregiert werden sollen, z.B. als Summe über aufeinanderfolgende Abschnitte mit Angabe von Beginn und Ende. Dieser zweite Verfahrensschritt S3 kann basierend auf dem abgeleiteten Messdatensatz beliebig oft durchlaufen werden.

In einem dritten Verfahrensschritt S3 wird die Vorschrift zum Erzeugen des Messdatensatzes an die Messeinrichtung übermittelt.

In einem optionalen vierten Verfahrensschritt S4 werden die Vorschriften zur Erzeugung des Messdatensatzes transformiert, d.h. numerisch optimiert oder eventuell numerische Operationen übergeleitet auf analytische Operationen, um z.B. mehrfache Rundungen infolge der Anwendung mehrerer eine Rundung beinhaltenden Anweisungen und die hierdurch verursachten Rundungsfehler zu reduzieren.

In einem fünften Verfahrensschritt S5 bestätigt die Messeinrichtung, dass der abgeleitete Messdatensatz basierend auf den Originaldaten zustande gekommen ist. Diese Bestätigung kann in Form einer digitalen Signatur erfolgen.

In einer optionalen Ausführungsform werden die Messdaten vor der Übermittlung in einem dem Verfahrensschritt S1 vorausgehender Verfahrensschritt S0 pseudonymisiert. Alternativ oder zusätzlich wird nur ein Teil der Messdaten, etwa nur die jeweiligen Zeitstempel übertragen. Hierdurch kann erreicht werden, dass die nicht benötigten Messdaten nicht in eine entfernte Datenverarbeitungsanlage des übertragen werden müssen, sondern in der Messeinrichtung verbleiben. Eine Pseudonymisierung kann auch in einem ersten Zwischenschritt S1A zwischen dem ersten und dem zweiten Verfahrensschritt S1,S2 erfolgen.

In einer typischen Implementierung des Verfahrens würde jedoch jede Abrechnungsinstanz in einer Kette von Weiterleitung die dem spezifisch strukturierten Messdatensatz entnommenen Messdaten bei Kenntnis der Anforderungen der nachfolgenden Abrechnungsinstanz so weit wie möglich aggregieren. Dies bedeutet, dass der Verfahrensschritt der Pseudonymisierung bevorzugt als erster Zwischenschritt S1A zwischen dem ersten und dem zweiten Verfahrensschritten S1,S2 vorzusehen ist.

Zusammenfassend ermöglicht das erfindungsgemäße Verfahren, die von einer Messeinrichtung gemessenen und bereitgestellten Messdaten für eine Mehrzahl von Abrechnungsinstanzen in einem jeweils spezifisch strukturierten Messdatensatz, insbesondere den jeweiligen Vorgaben einer jeweiligen Abrechnungsinstanz entsprechend, bereitzustellen.

Indem Messdaten für eine Vielzahl verschiedener und voneinander unabhängiger Tarife zwischen den jeweiligen Beteiligten, z.B. Abrechnungsinstanzen, entlang einer Verrechnungskette zur Verfügung gestellt werden können, ergibt sich die Möglichkeit, durch entsprechende Vertrags- bzw. Tarifgestaltung Anreize für das jeweils erwünschte Verhalten zu schaffen, ohne dass diese Komplexität der Vertrags- bzw. Tarifgestaltung für einen Nutzer der Elektromobilitätsinfrastruktur bemerkbar ist. In vorteilhafter Weise können Elektromobilitätsplattformen auch Optimierungen über mehrere Fahrzeuge hinweg vornehmen.

## Patentansprüche

1. Verfahren zur Bereitstellung eines spezifisch strukturierten Messdatensatz durch eine Messeinrichtung, umfassend die Schritte:
a) Senden eines ersten Messdatensatzes an zumindest eine Abrechnungsinstanz, der erste Messdatensatz enthaltend eine Mehrzahl strukturiert geordneter Messdaten;
b) Empfang eines in Antwort auf den ersten Messdatensatz von einer der zumindest einen Abrechnungsinstanz gesendeten zweiten Messdatensatzes, wobei anhand der strukturiert geordneten Messdaten des zweiten Messdatensatzes zumindest durch Vergleich mit den strukturiert geordneten Messdaten des ersten Messdatensatzes mindestens eine Vorschrift für den spezifisch strukturierten Messdatensatzes ableitbar ist;
c) Zusammenstellung einer Mehrzahl von der Messeinrichtung gemessener und/oder ermittelter Messdaten und Erzeugung eines anhand der mindestens einen Vorschrift spezifisch strukturierten Messdatensatzes;
d) Anreicherung des spezifisch strukturierten Messdatensatzes mit mindestens einem Authentizitätsdatum zur Bestätigung, dass der spezifisch strukturierte Messdatensatz von der Messeinrichtung gemessene und/oder ermittelte Messdaten enthält, welche gemäß der mindestens einen Vorschrift strukturiert sind; und;
e) Übertragung des mindestens einen mit dem Authentizitätsdatum angereicherten spezifisch strukturierten Messdatensatzes an die zumindest eine Abrechnungsinstanz.

2. Verfahren gemäß einem der vorgenannten Patentansprüche, bei der das Senden des ersten Messdatensatzes an eine Mehrzahl der zumindest einen Abrechnungsinstanz in einer kettenförmigen Weise durch jeweilige Weiterleitung zwischen den Abrechnungsinstanzen erfolgt.

3. Verfahren gemäß einem der vorgenannten Patentansprüche, bei dem in den ersten Messdatensatz und/oder in den zweiten Messdatensatz zumindest teilweise pseudonymisierte Messdaten aufgenommen werden.

4. Verfahren gemäß einem der vorgenannten Patentansprüche, bei dem die mindestens eine Vorschrift für den spezifisch strukturierten Messdatensatzes als explizite Anweisung von der Messeinrichtung empfangen wird.

5. Verfahren gemäß einem der vorgenannten Patentansprüche, bei dem die von der Messeinrichtung abgeleitete mindestens eine Vorschrift von der Messeinrichtung an mindestens eine Abrechnungsinstanz gesendet wird.

6. Verfahren gemäß einem der vorgenannten Patentansprüche, bei dem vor Erzeugung des spezifisch strukturierten Messdatensatzes eine Mehrzahl von Vorschriften unter Anwendung mindestens einer Optimierungsoperation, vorzugweise numerischer oder logischer Optimierungsoperation, auf eine reduzierte Mehrzahl an Vorschriften reduziert werden.

7. Verfahren gemäß einem der vorgenannten Patentansprüche, wobei das mindestens eine Authentizitätsdatum mindestens eine kryptographische Signatur umfasst.

8. Verfahren gemäß Patentanspruch 7, wobei die mindestens eine kryptographische Signatur über ein Messdatum, über eine insbesondere durch die mindestens eine Vorschrift definierte Mehrzahl von Messdaten und/oder über den gesamten spezifisch strukturierten Messdatensatz gebildet wird.

9. Messeinrichtung zur Bereitstellung eines spezifisch strukturierten Messdatensatz umfassend,
a) eine Steuereinheit zum Senden eines ersten Messdatensatzes an zumindest eine Abrechnungsinstanz, der erste Messdatensatz enthaltend eine Mehrzahl strukturiert geordneter Messdaten;
b) die Steuereinheit eingerichtet zum Empfang eines in Antwort auf den ersten Messdatensatz von einer der zumindest einen Abrechnungsinstanz gesendeten zweiten Messdatensatzes, wobei anhand der strukturiert geordneten Messdaten des zweiten Messdatensatzes zumindest durch Vergleich mit den strukturiert geordneten Messdaten des ersten Messdatensatzes mindestens eine Vorschrift für den spezifisch strukturierten Messdatensatzes ableitbar ist;
c) die Steuereinheit eingerichtet zur Zusammenstellung einer Mehrzahl von der Messeinrichtung gemessener und/oder ermittelter Messdaten und Erzeugung eines anhand der mindestens einen Vorschrift spezifisch strukturierten Messdatensatzes;
d) die Steuereinheit eingerichtet zur Anreicherung des spezifisch strukturierten Messdatensatzes mit mindestens einem Authentizitätsdatum zur Bestätigung, dass der spezifisch strukturierte Messdatensatz von der Messeinrichtung gemessene und/oder ermittelte Messdaten enthält, welche gemäß der mindestens einen Vorschrift strukturiert sind; und;
e) die Steuereinheit eingerichtet zur Übertragung des mindestens einen mit dem Authentizitätsdatum angereicherten spezifisch strukturierten Messdatensatzes an die zumindest eine Abrechnungsinstanz.

10. Messeinrichtung gemäß Patentanspruch 9, eingerichtet zur Messung mindestens einer elektrischen Größe, aus der zumindest indirekt eine übergebene oder bezogene elektrische Energie eines der Messeinrichtung zugordneten Messobjekts ermittelbar ist.

11. Ladestation, umfassend mindestens eine Messeinheit gemäß einem der vorgenannten Patentansprüche 9 bis 10.

12. Transportmaschine, insbesondere nicht-schienengebundenes Elektrofahrzeug, umfassend mindestens eine Messeinheit gemäß einem der vorgenannten Patentansprüche 9 bis 10.
